Europäisches Patentamt

European Patent Office

Office européen des brevets

(11) Publication number: **0 199 229**
**A2**

## (12) EUROPEAN PATENT APPLICATION

(21) Application number: **86105052.4**

(22) Date of filing: **12.04.86**

(51) Int. Cl.⁴: **B 62 B 3/00**
**B 62 B 3/04**

(30) Priority: **25.04.85 SE 8502013**

(43) Date of publication of application:
**29.10.86 Bulletin 86/44**

(84) Designated Contracting States:
**AT BE CH DE FR GB IT LI NL SE**

(71) Applicant: **Tetra Pak International AB**
**P.O. Box 61**
**S-221 00 Lund(SE)**

(72) Inventor: **Petersson, Jan**
**Kämpagränd 19A**
**SE-223 76 Lund(SE)**

(74) Representative: **Bentz, Bengt Christer**
**TETRA PAK INTERNATIONAL AB Patent Department Box 61**
**S-221 00 Lund(SE)**

(54) Truck.

(57) Trucks of the rolling container type are frequently used for the handling and transport of non-returnable packages for, e.g. milk. The trucks generally have three side walls and an openable fourth side wall or gate. In the automatic handling and loading of rolling containers the handling of the gate constitutes a problem, and the gate, moreover, is frequently exposed to damage which impairs its function. In order to overcome this difficulty, the gate in the rolling container in accordance with the invention has been replaced by retaining bars which terminate each shelf (7) at its free end. The retaining bars (10) extend upwards as well as downwards from the shelf plane and thus come into contact with the upper as well as the lower end of the packing containers placed in the rolling container, as a result of which the packing containers are effectively prevented from falling off the shelves during the handling of the rolling container.

EP 0 199 229 A2

Croydon Printing Company Ltd

TRUCK

The present invention relates to a truck with walls and an open side and collapsible shelves for goods.

A number of different types of goods, e.g. dairy products such as milk, cream or the like are packaged in consumer packages of the non-returnable type. The filled consumer packages are collected after manufacture in large trucks in order to facilitate the transport to shops and other retailing outlets. A common truck for this purpose is the so-called rolling pallet which consists of collapsible steel or wire construction with a floor, three side walls and a fourth side wall in the form of a gate. The rolling pallets are handled largely automatically in large dairies and the loading with several layers or individual packing containers is frequently also done by machines. In this connection it has been found that the handling of the openable gate creates problems, and it is necessary in most cases to handle this manually. Moreover the gate is often exposed to damage, which means that its manoeuvring and locking in closed position is rendered difficult.

It is the main object of the gate to prevent the packing containers situated outermost on the shelves of the truck from being tipped out of the truck when the latter is handled or transported. Various gate designs have been tried, but up to now it has not been possible to find any design which in a satisfactory manner would eliminate the aforementioned problem.

It is an object of the present invention, therefore, to provide a truck which is suitable for automatic handling and which is of such a design that the load is maintained in its position during the handling of the truck. It is a further object of the present invention to provide a truck of such a design that the earlier problems during automatic handling and loading are eliminated.

It is a further object of the present invention to provide a truck wherein the gate is replaced by another design of corresponding function, as a result of which all the aforementioned advantages are overcome.

These and other objects have been achieved in accordance with the invention in that a truck with walls and an open side and collapsible shelves for goods has been given the characteristic that the edges of the shelves facing towards the open side of the truck are provided with retaining bars.

Preferred embodiments of the truck in accordance with the invention have been given, moreover, the characteristics which are evident from the subsidiary claims.

By providing the free edges of the shelves in accordance with the invention with retaining bars the gate mentioned earlier can be completely discarded. Since the retaining bars extend above as well as below the plane of the shelves the free space between the shelves will be restricted to such an extent that the packed goods are effectively hindered from falling off the shelves. At the same time the retaining bars serve as a protection for the goods, if during handling two trucks were to come into contact with each other.

A preferred embodiment of the truck in accordance with the invention will now be described in more detail with special reference to the enclosed drawings which only show the details indispensable for an understanding of the invention.

Fig.1 shows in perspective a truck in accordance with the invention loaded with packing containers.

Fig.2 shows on a larger scale the truck in accordance with Fig.1 from in front and in partly loaded condition, the different shelves being shown shematically in various momentary positions.

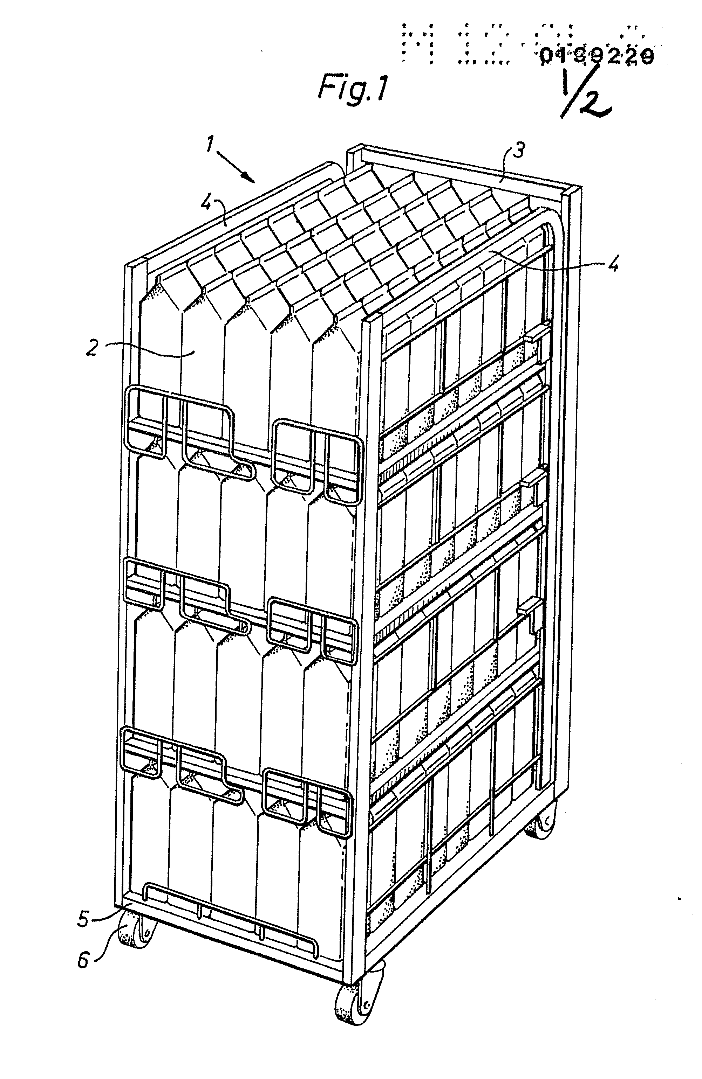

The truck 1 shown in Fig.1 is of the type generally used for the storage and the transport of non-returnable packages 2 for milk, juice or the like. The truck 1 comprises a rear wall 3 and side walls 4 connected to the same. The truck 1, moreover, has a floor 5 which is provided with four wheels 6. This type of truck usually is referred to as a rolling container and the different walls which are made of metal frames and wire gratings are in hinged connection with one another so as to allow compact storage of non-filled trucks. However, this is prior art and need not be described in any detail.

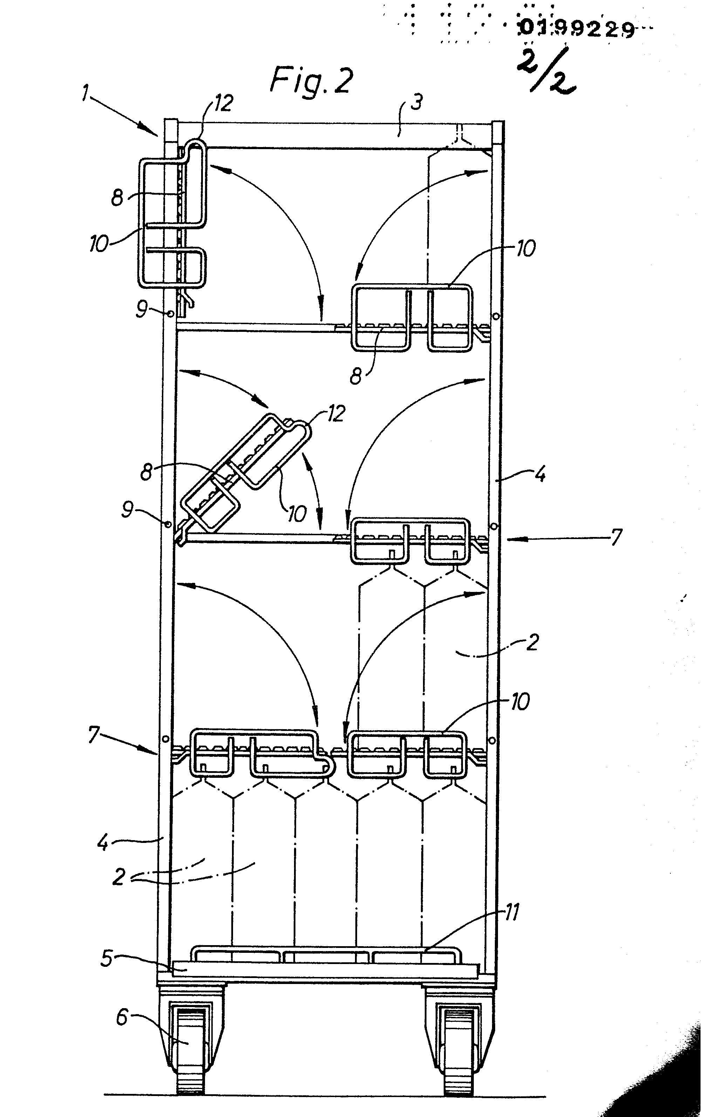

The truck 1 in accordance with the invention, as is visible most clearly from Fig.2, comprises a number of shelves 7, which are situated above one another at a mutual distance which is such that the packing containers 2 which are to be carried just have room between the different shelves 7. Each shelf 7 comprises two shelf parts 8 which by means of hinges 9 are joined to the adjacent side wall 4 of the truck 1. Thus each of the shelf parts 8 by itself can be pivoted upwards over 90° from the horizontal position shown, so that they are in a plane with, and immediately adjoining, the side wall 4.

In order to prevent the packing containers 2 placed in the truck 1 from falling out of the truck at its front side which has no side wall, each shelf 7 is provided with retaining bars 10 which extend along the free edge of each shelf part 8. The retaining bars extend above the plane of the shelves over such a length as is required in order to prevent the packing containers placed in the truck from sliding off the shelf, but the height of the retaining bars 10 is limited by the fact that when the shelf parts 8 are in opened position the retaining bars must not project too far outside the side walls 4, since otherwise they might hinder the handling of the empty trucks 1 and render more difficult a compact storage of the empty trucks.

As mentioned earlier the retaining bars 10 also extend downwards in relation to the shelf plane. The downwards extension of the retaining bars 10 is determined by the distance between the different shelf parts 8 and by the height of the packing containers 2 which are to be placed in the truck. More particularly, the retaining bar 10 is designed so that it extends below the upper edge of the packing containers 2 placed in the truck. As a result the size of the free opening between the different shelves 7 is reduced to such an extent that it is impossible for the packing containers 2 loaded to fall out of the truck when the shelf parts 8 are in horizontal position.

The floor of the truck 1 is provided at its front edge with a further fixed bar 11 which prevents the packing containers 2 in the lowest layer from sliding off the floor. The packing containers 2 placed on the top most shelf 7 of the truck 1 cannot for obvious

reasons be retained by means of co-operation with a retaining bar of any shelf situated above, and the retaining bar on the topmost shelf, therefore, has been given a somewhat different design from the other retaining bars 10. Thus the topmost retaining bar extendsappreciably higher from the plane of the shelf 7 than the other retaining bars and consequently will support the packing containers placed on the upper shelf farther up along the packing container sides thus ensuring that the packing containers placed on this shelf too cannot fall out of the truck when the same is handled. For additional safety the topmost layer of packing containers may possibly be retained with the help of a strap or the like placed manually onto the top edge of the truck.

As mentioned earlier, in the preferred embodiment of the truck in accordance with the invention each shelf 7 is formed of two shelf parts 8, each of which by itself can be pivoted up to a rest or load position along the inner surface of the side walls 4. To bridge over the space thus formed between the retaining bar 10 on each shelf part 8 the retaining bar on the one shelf part extends a little outside the edge line of the shelf part facing towards the opposite shelf part. The projection 12, so formed bridges over the space arising and prevents the middle one of the packing containers standing on the underlying shelf 7 from being able to fall out in the space between the two parts of the retaining bar.

To increase further the stability of the packing containers carried by means of a truck, the internal dimensions between the side walls 4 and between the rear wall 3 and the retaining bars 10 are adapted to the goods for which the truck is intended and thus constitute substantially a multiple of the corresponding dimension of the packing containers. Consequently the packing containers will stand firmly in the truck 1, and practical trials with the preferred embodiment of the truck in accordance with the invention have shown that by means of the design in accordance with the invention the risk of tipped over or dropped packing containers has been wholly eliminated. Owing to the absence of the previously obligatory gate on the front of the truck, the handling of the truck can be done completely automatically without any difficulty, the truck being

- 5 -

0199229

filled first in conventional manner with a bottom layer of packing containers placed on the floor 5 of the truck, whereupon the two shelf parts 8 directly above the floor are folded down to form a shelf 7 onto which can be placed the next layer. As soon as a layer of packing containers has been completed, the shelf parts 8 of the shelf plane located directly above are folded down and as a result the parts of the retaining bars 8 extending downwards will immediately lock the previously completed layer of packing containers. It has also been shown in the practical trials with trucks in accordance with the invention that the combined retaining bars impart to the loaded containers a good protection against mechanical damage when trucks e.g. during manoeuvring in narrow spaces, collide with each other.

CLAIMS

1. A truck (1) with walls (3,4) and an open side and collapsible shelves (7) for goods characterized in that the edges of the shelves (7) facing towards the open side of the truck (1) are provided with retaining bars (10).

2. A truck in accordance with claim 1, characterized in that the retaining bars (10) extend upwards as well as downwards from the plane of the shelf (7).

3. A truck in accordance with claim 2, characterized in that the retaining bars (10) extend downwards from the plane of the shelf (7) over such a length that they reduce the size of the free opening between the said shelf (7) and the shelf (7) situated below.

4. A truck in accordance with claim 3, characterized in that the parts of the retaining bars (10) extending downwards are adapted to cooperate with the goods (2) which are supported by the shelf (7) below.

5. A truck in accordance with one or more of the preceding claims, characterized in that the shelves (7) are supported on hinges in opposite side walls (4) of the truck (1).

6. A truck in accordance with claim 5, characterized in that each shelf (7) comprises two hinged shelf parts (8), one of which has a retaining bar (10) which extends a little outside the edge line of the shelf part (8) so as to bridge over the space arising between the shelf parts (8).

7. A truck in accordance with one or more of the preceding claims, characterized in that the distance between the shelves (7) as well as the distance between the retaining bars (10) and the opposite wall (3) are adapted to the goods (2) the truck is intended for.

8. A truck in accordance with one or more of the preceding claims characterized in that the truck (1) is provided with wheels (6).

*Fig.1*

0199229

1/2

**Fig.2**